# EUROPÄISCHE PATENTSCHRIFT

(11) **EP 1 960 642 B1**
(45) Veröffentlichungstag und Bekanntmachung des Hinweises auf die Patenterteilung: **15.04.2009**
(21) Anmeldenummer: 06819888.6
(22) Anmeldetag: 01.12.2006
(51) Int. Cl.: F01N 11/00

(54) **VERFAHREN ZUR DIAGNOSE EINES IN EINEM ABGASBEREICH EINER BRENNKRAFTMASCHINE ANGEORDNETEN KATALYSATORS UND VORRICHTUNG ZUR DURCHFÜHRUNG DES VERFAHRENS**
METHOD FOR THE DIAGNOSIS OF A CATALYTIC CONVERTER WHICH IS ARRANGED IN AN EXHAUST AREA OF AN INTERNAL COMBUSTION ENGINE AND DEVICE FOR CARRYING OUT SAID METHOD
PROCEDE DE DIAGNOSTIC POUR UN CATALYSEUR SITUE DANS LA ZONE DES GAZ D'ECHAPPEMENT D'UN MOTEUR A COMBUSTION INTERNE ET DISPOSITIF PERMETTANT LA MISE EN OEUVRE DU DIT PROCEDE

(30) Priorität: 05.12.2005 DE 102005057957; 08.12.2005 DE 102005058524; 23.12.2005 DE 102005062116
(43) Veröffentlichungstag der Anmeldung: 27.08.2008
(73) Patentinhaber: ROBERT BOSCH GMBH, 70442 Stuttgart (DE)
(72) Erfinder: CLEMENT, Albrecht, 71665 Vaihingen (DE); WOLL, Christoph, 70839 Gerlingen (DE); HOTZEL, Richard, 70469 Stuttgart (DE); LABBE, Magnus, 71696 Moeglingen (DE)
(86) Internationale Anmeldenummer: PCT/EP2006/069188
(87) Internationale Veröffentlichungsnummer: WO 2007/065853

(56) Entgegenhaltungen:
- DE-A1- 4 128 823
- DE-A1- 19 801 626
- US-A- 5 165 230

## Beschreibung

### Stand der Technik

Die Erfindung geht aus von einem Verfahren zur Diagnose (On-Board-Diagnose) eines in einem Abgasbereich einer Brennkraftmaschine angeordneten Katalysators und von einer Vorrichtung zur Durchführung des Verfahrens nach der Gattung der unabhängigen Ansprüche.

Die Erfindung betrifft weiterhin ein Steuergerätprogramm sowie ein Steuergerät-Programmprodukt.

Das Sauerstoff-Speichervermögen eines Katalysators wird dazu ausgenutzt, in Magerphasen des einer Brennkraftmaschine zugeführten Luft-Kraftstoff-Gemischs Sauerstoff aufzunehmen und in Fettphasen wieder abzugeben. Hierdurch wird erreicht, dass unerwünschte Abgaskomponenten effizient konvertiert werden können. Mit zunehmender Alterung des Katalysators nimmt das Sauerstoff-Speichervermögen ab. Hierdurch kann in den Fettphasen nicht mehr genügend Sauerstoff für Oxidationsreaktionen zur Verfügung gestellt werden.

Ein auf der Bewertung der Sauerstoff-Speicherfähigkeit eines Katalysators beruhendes Katalysator-Diagnoseverfahren ist in der Patentanmeldung DE 24 44 334 beschrieben. Der Brennkraftmaschine werden abwechselnd ein fettes Luft-Kraftstoff-Gemisch mit einem Lambda von 0,95 und ein mageres Luft-KraftstoffGemisch mit einem Lambda von 1,05 zugeführt. Ein stromabwärts nach dem Katalysator angeordneter Sprung-Lambdasensor detektiert in einer Fettphase das Auftreten von Sauerstoffmangel und in einer Magerphase das Auftreten von Sauerstoffüberschuss. Das Signal des Stromabwärts-Sprung-Lambdasensors stoppt einen Zeitgeber, der von einem Signal gestartet wird, das ein stromaufwärts vor dem Katalysator angeordneter Sprung-Lambdasensor bereitstellt. Die Einstellung der Luftzahl Lambda in den Fett- und Magerphasen ist trotz der eingesetzten Sprung-Lambdasensoren, die eine genaue Erfassung nur eines um den Lambdawert 1 begrenzten Lambdabereichs ermöglichen, im Rahmen einer Lambdaregelung vorgesehen. Die vorgegebenen Abweichungen der Luftzahl Lambda vom Wert 1 für eine stöchiometrische Verbrennung sind derart festgelegt, dass die Kennlinien der beiden Sprung-Lambdasensoren gerade noch ausreichen, die Abweichungen vom Wert 1 wenigstens näherungsweise quantitativ zu erfassen. Voraussetzung für die Diagnose ist ein wenigstens näherungsweise konstanter Gasdurchsatz. Dieser wird dadurch sichergestellt, dass die Diagnose nur freigegeben wird, wenn ein bestimmtes, von einem Luftmengensensor und/oder Drosselklappen-Positionsgeber bereitgestelltes Signal vorliegt.

Das im DE-Patent 41 12 480 beschriebene Katalysator-Diagnoseverfahren, das ebenfalls auf der Bewertung der Sauerstoff-Speicherfähigkeit des Katalysators beruht, geht dadurch einen Schritt weiter, dass die dem Katalysator im Rahmen der Fett- und Magerphasen zugeführte Sauerstoffmenge quantitativ anhand der gemessenen Luftströmung und der stromaufwärts vor dem Katalysator mit einem Breitband-Lambdasensor gemessenen Luftzahl Lambda mit einer Integration berechnet wird.

Sofern stromaufwärts vor dem Katalysator ein Sprung-Lambdasensor (Zweipunkt-Lambdasensor) eingesetzt ist, kann der Sauerstoffgehalt des eingetragenen Abgases quantitativ nicht ohne weiteres ermittelt werden. Dies gilt sowohl für das fette Gemisch als auch für das magere Gemisch. Ein Ansatz für eine Ermittlung des Sauerstoffgehalts im Abgas geht von einer korrekten Vorsteuerung des der Brennkraftmaschine zugeführten Luft-Kraftstoff-Betriebsgemischs aus. Ein Vorsteuerfehler beeinflusst jedoch das Diagnoseergebnis erheblich.

Der Erfindung liegt die Aufgabe zugrunde, ein Verfahren zur Diagnose eines in einem Abgasbereich einer Brennkraftmaschine angeordneten Katalysators und eine Vorrichtung zur Durchführung des Verfahrens anzugeben, die eine hohe Genauigkeit bei der Ermittlung der Sauerstoff-Speicherfähigkeit des Katalysators erzielen.

### Offenbarung der Erfindung

Die Aufgabe wird durch die in den unabhängigen Ansprüchen angegebenen Merkmale jeweils gelöst.

Die erfindungsgemäße Vorgehensweise erhöht die Genauigkeit und die Zuverlässigkeit der Katalysatordiagnose dadurch, dass die Sauerstoff-Speicherfähigkeit des Katalysators, welche der Diagnose zugrunde liegen soll, mit hoher Zuverlässigkeit ermittelt werden kann.

Vorgesehen ist die Ermittlung einer Abweichung zwischen einem Diagnosegemisch-Lambda-Ist-Signalverlauf und einem berechneten Diagnosegemisch-Lambda-Signalverlauf anhand der Zeitdifferenz, die zwischen einem Lambda-1-Durchgang des Diagnosegemisch-Lambda-Ist-Signalverlaufs und einem Lambda-1-Durchgang des berechneten Diagnosegemisch-Lambda-Signalverlaufs auftritt. Die ermittelte Zeitdifferenz wird zur Korrektur eines vorgegebenen Diagnosegemisch-Lambda-Soll-Signalverlaufs oder zum Abbruch der Diagnose herangezogen.

Der Abbruch einer Diagnose soll auch in dem Sinn verstanden werden, dass ein bereits ermitteltes Diagnoseergebnis verworfen wird.

Vorteilhafte Weiterbildungen und Ausgestaltungen der erfindungsgemäßen Vorgehensweise ergeben sich aus abhängigen Ansprüchen.

Eine Ausgestaltung sieht vor, dass der Lambda-1-Durchgang des Diagnosegemisch-Lambda-Ist-Signalverlaufs anhand eines gemessenen Stromaufwärts-Lambdasignals mit einer Zweipunkt-Charakteristik beziehungsweise Sprung-Charakteristik erfasst wird. Ein Lambdasensor, der ein solches Sensorsignal mit Zweipunkt-Charakteristik beziehungsweise Sprung-Charakteristik zur Verfügung stellt, ist besonders preiswert erhältlich. Dadurch ergeben sich erhebliche Einsparungen beim Serieneinsatz der erfindungsgemäßen Katalysatordiagnose.

Eine weitere Erhöhung der Zuverlässigkeit beziehungsweise der Genauigkeit der Diagnose ergibt sich durch eine Mittelwertbildung bei der Ermittlung des Lambda-1-Durchgangs.

Wie bereits erwähnt, wird gemäß einer ersten Ausführungsform die ermittelte Zeitdifferenz herangezogen, ein Korrektursignal für den Diagnosegemisch-Lambda-Soll-Signalverlauf festzulegen, um den vorgegebenen Diagnosegemisch-Lambda-Soll-Signalverlauf an den tatsächlich auftretenden Diagnosegemisch-Lambda-Ist-Signalverlauf möglichst genau anzunähern. Gemäß einer zweiten Ausführungsform wird die ermittelte Zeitdifferenz durch Vergleich mit einem Zeitdifferenz-Schwellenwert dazu herangezogen, ein Korrektursignal für den berechneten Diagnosegemisch-Lambda-Signalverlauf festzulegen. Gemäß einer weiteren Ausführungsform wird die ermittelte Zeitdifferenz durch Vergleich mit einem Zeitdifferenz-Schwellenwert dazu herangezogen, bei einer Schwellenwert-Überschreitung die Diagnose abzubrechen beziehungsweise ein bereits ermitteltes Diagnoseergebnis zu verwerfen.

Die erfindungsgemäße Vorrichtung zur Durchführung des Verfahrens betrifft zunächst ein Steuergerät, welches zur Durchführung des Verfahrens speziell hergerichtet ist.

Das Steuergerät enthält vorzugsweise wenigstens einen elektrischen Speicher, in welchem die Verfahrensschritte als Steuergerätprögramm abgelegt sind.

Das erfindungsgemäße Steuergerätprogramm sieht vor, dass alle Schritte des erfindungsgemäßen Verfahrens ausgeführt werden, wenn es in einem Steuergerät abläuft.

Das Steuergerät-Programmprodukt mit einem auf einem maschinenlesbaren Träger gespeicherten Programmcode führt das erfindungsgemäße Verfahren aus, wenn das Programm in einem Steuergerät ausgeführt wird.

Weitere vorteilhafte Weiterbildungen und Ausgestaltungen der erfindungsgemäßen Vorgehensweise ergeben sich aus weiteren abhängigen Ansprüchen. Ausführungsbeispiele der Erfindung sind in der Zeichnung dargestellt und in der nachfolgenden Beschreibung näher erläutert.

Es zeigen:
- Figur 1: ein technisches Umfeld, in welchem ein erfindungsgemäßes Verfahren abläuft und
- Figur 2: Lambda-Signalverläufe in Abhängigkeit von der Zeit.

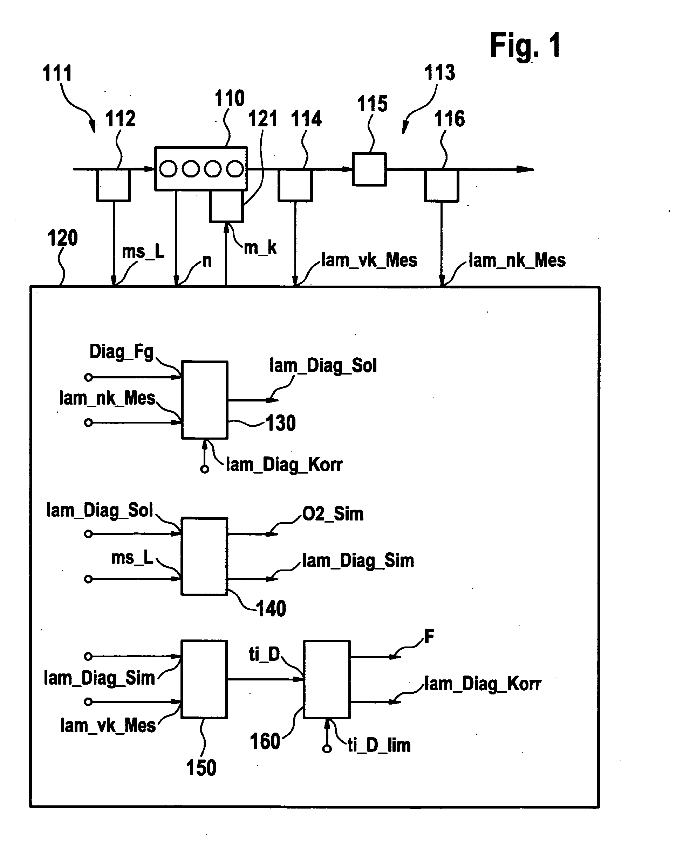

Figur 1 zeigt eine Brennkraftmaschine 110, in deren Ansaugbereich 111 eine Lufterfassung 112 und in deren Abgasbereich 113 ein Stromaufwärts-Lambdasensor 114, der stromaufwärts vor einem Katalysator 115 angeordnet ist, und ein Stromabwärts-Abgassensor 116, der stromabwärts nach dem Katalysator 115 angeordnet ist, vorgesehen sind.

Die Lufterfassung 112 stellt einem Steuergerät 120 ein Luftsignal ms_L, die Brennkraftmaschine 110 eine Drehzahl n, der Stromaufwärts-Lambdasensor 114 ein gemessenes Stromaufwärts-Lambdasignal Iam_vK_Mes und der Stromabwärts-Lambdasensor 116 ein gemessenes Stromabwärts-Lambdasignal Iam_nK_Mes zur Verfügung. Das Steuergerät 120 stellt einer Kraftstoff-Zumessung 121 ein Kraftstoffsignal m_K zur Verfügung.

Die beiden Lambdasensoren 114, 116 sind vorzugsweise als preiswerte Sprung-Lambdasensoren realisiert, sodass die gemessenen Lambdasignale Iam_vK_Mes, Iam_nK_Mes Sprung-Charakteristik aufweisen. Die Lambdasensoren 114, 116 ermöglichen das Betreiben der Brennkraftmaschine 110 mit einem Luft-KraftstoffGemisch, das auf einen Lambdawert im Bereich von Lambda = 1, beispielsweise im Bereich von Lambda = 0,995 und 1,005 mit hoher Genauigkeit geregelt werden kann.

Vorgesehen ist eine Diagnose des Katalysators 115, die auf einer Ermittlung zumindest eines Maßes für dessen Sauerstoff-Speicherfähigkeit beruht, die als Maß für die Alterung des Katalysators 115 herangezogen werden kann. Eine geringe Sauerstoff-Speicherfähigkeit bedeutet hierbei ein gealterter Katalysator 115.

Vorgesehen sein kann, dass die Diagnose nur durchgeführt wird, wenn wenigstens eine Betriebsgröße der Brennkraftmaschine 110 eine vorgegebene Bedingung erfüllt. Als Betriebsgröße kann beispielsweise die Drehzahl n oder eine Last der Brennkraftmaschine 110 herangezogen werden. Neben der Überprüfung, ob die wenigstens eine Betriebsgröße n einen Schwellenwert über- oder unterschreitet beziehungsweise in einem Bereich liegt, ist zweckmäßigerweise eine Überprüfung vorgesehen, ob der Differenzialquotient, der durch den Differenzenquotienten angenähert werden kann, unterhalb eines vorgegebenen Schwellenwerts liegt. Dadurch kann sichergestellt werden, dass die Brennkraftmaschine in einem zumindest näherungsweise stationären Betriebszustands betrieben wird. Die Diagnose wird freigegeben und durchgeführt, wenn ein Diagnose-Freigabesignal Diag_Fg vorliegt, das einer Kenngrößen-Festlegung 130 zur Verfügung gestellt wird.

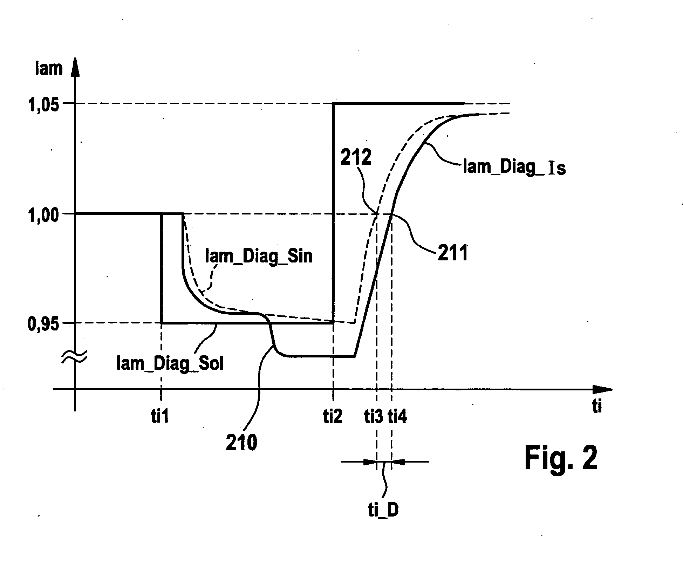

Vor einem in Figur 2 gezeigten ersten Zeitpunkt ti1 wird die Brennkraftmaschine 110 mit einem Luft-Kraftstoff-Betriebsgemisch betrieben, dessen Lambdawert auf beispielsweise Lambda = 1 wenigstens näherungsweise festgelegt ist. Zum ersten Zeitpunkt ti1 tritt das Diagnose-Freigabesignal Diag_Fg auf. Die Kenngrößen-Festlegung 130 veranlasst daraufhin das Betreiben der Brennkraftmaschine 110 mit einem Diagnosegemisch, welches auf einen Lambdawert von beispielsweise Lambda = 0,95 festgelegt wird. Die Änderung auf das neue Lambda im Rahmen der Katalysatordiagnose erfolgt vorzugsweise jeweils sprungförmig. Der zeitliche Verlauf des Lambdas des Diagnosegemischs ist in Figur 2 als Diagnosegemisch-Lambda-Soll-Signalverlauf Iam_Diag_Sol eingetragen.

Die Umschaltung zu einem zweiten Zeitpunkt ti2 erfolgt in Abhängigkeit von dem vom Stromabwärts-Lambdasensor 116 bereitgestellten gemessenen Lambdasignal Iam_nK_Mes, das der Kenngrößen-Festlegung 130 zur Verfügung steht. Die Änderung wird vorgenommen, wenn das gemessene, nicht dargestellte Stromabwärts-Lambdasignal Iam_nK_Mes wenigstens näherungsweise einen Lambda-1-Durchgang aufweist, der den Durchbruch des Sauerstoffmangels stromabwärts nach dem Katalysator 115 signalisiert. Danach legt die Kenngrößen-Festlegung 130 den Diagnosegemisch-Lambda-Soll-Signalverlauf Iam_Diag_Sol auf ein mageres Lambda von beispielsweise 1,05 fest. Die Umschaltung könnte im prinzipiell unmittelbar erfolgen. Vorzugsweise wird jedoch nicht sofort auf ein mageres Lambda umgeschaltet, sondern erst noch eine zusätzliche Menge fetten Abgases in den Abgasbereich 13 eingetragen. Die Umschaltung kann beispielsweise nach Ablauf einer vorgegebenen Verzögerungszeit erfolgen. Eine nicht näher gezeigte weitere Umschaltung auf das fette Diagnosegemisch mit einem Lambda von 0,95 erfolgt, wenn im gemessenen Stromabwärts-Lambdasignal Iam_nK_Mes wieder ein Lambda-1-Durchgang auftritt, der den Durchbruch des Sauerstoffüberschusses im Katalysator 115 signalisiert. Auch in diesem Fall könnte die Umschaltung prinzipiell unmittelbar erfolgen. Vorzugsweise wird jedoch auch hier nicht sofort auf ein fettes Lambda umgeschaltet, sondern erst noch eine zusätzliche Menge mageren Abgases in den Abgasbereich 13 eingetragen. Die Umschaltung kann auch hier beispielsweise nach Ablauf einer vorgegebenen Verzögerungszeit erfolgen. Anstelle des Stromabwärts-Sprung-Lambdasensors 116 kann selbst verständlich alternativ ein Stromabwärts-Breitband-Lambdasensor verwendet werden.

Die Sauerstoff-Speicherfähigkeit O2_Sim des Katalysators 115 kann in einer Kenngrößen-Berechnung 140 anhand eines Integrals ermittelt werden, welcher das Luftsignal ms_L, der Diagnosegemisch-Lambda-Soll-Signalverlauf Iam_Diag_Sol und ein Korrektursignal Korr zur Verfügung stehen. Die Integration wird über diejenige Zeitdauer durchgeführt, während welcher der Diagnosegemisch-Lambda-Soll-Signalverlauf Iam_Diag_Sol ein mageres Lambda von beispielsweise 1,05 aufweist. Vorzugsweise erstreckt sich die Katalysatordiagnose über mehrere Perioden des Diagnosegemisch-Lambda-Soll-Signalverlaufs Iam_Diag_Sol, um eine Mittelwertbildung der Berechnung der Sauerstoff-Speicherfähigkeit O2_Sim über mehrere Perioden durchführen zu können.

Bei der Ermittlung des Diagnoseergebnisses wird vorausgesetzt, dass das Lambda des tatsächlich im Abgasbereich 113 auftretenden Diagnosegemisch-Lambda-Ist-Signalverlaufs Iam_Diag_Is mit dem vorgegebenen Diagnosegemisch-Lambda-Soll-Signalverlauf Iam_Diag_Sol - abgesehen von bekannten Signalverzögerungen durch Laufzeiten und abgesehen von Einschwingvorgängen - weitgehend übereinstimmt. Eventuell auftretende Abweichungen wirken sich unmittelbar auf das Diagnoseergebnis aus.

Im gezeigten Ausführungsbeispiel wird davon ausgegangen, dass zwischen dem ersten und zweiten Zeitpunkt ti1, ti2 eine Abweichung 210 aufgetreten ist. Abweichungen 210 können beispielsweise durch eine Streuung oder Drift von nicht näher gezeigten, in der Kraftstoff-Zumessung 121 enthaltenen Kraftstoff-Einspritzventilen oder durch Fehler in der Lufterfassung 112 auftreten, die im Rahmen einer Adaption eines nicht näher gezeigten Lambdareglers nicht vollständig kompensiert sind.

Vorgesehen ist eine Zeitdifferenz-Ermittlung 150, welche eine Zeitdifferenz ti_D ermittelt, die zwischen einem Lambda-1-Durchgang 211 des Diagnosegemisch-Lambda-Ist-Signalverlaufs Iam_Diag_Is und dem Lambda-1-Durchgang 212 eines von der Kenngrößen-Berechnung 140 berechneten Diagnosegemisch-Lambda-Signalverlaufs Iam_Diag_Sim auftritt. Eine geringe Zeitdifferenz ti_D entspricht einer guten Übereinstimmung zwischen dem Diagnosegemisch-Lambda-Ist-Signalverlauf Iam_Diag_Is und dem berechneten Diagnosegemisch-Lambda-Signalverlauf Iam_Diag_Sim. In diesem Fall kann die von der Kenngrößen-Berechnung 140 ermittelte Sauerstoff-Speicherfähigkeit O2_Sim als zuverlässig gelten und der Diagnose zugrunde gelegt werden. Eine größere Zeitdifferenz fi_D in positiver oder negativer Richtung deutet auf eine höhere Abweichung 210 hin, sodass die ermittelte Sauerstoff-Speicherfähigkeit O2_Sim voraussichtlich fehlerhaft ist und das Diagnoseergebnis entsprechend unzuverlässig ausfällt.

Die ermittelte Zeitdifferenz ti_D kann in einer Zeitdifferenz-Bewertung 160 dazu herangezogen werden, einen Diagnoselambda-Korrekturwert Iam_Diag_Korr zu ermitteln, welcher der Kenngrößen-Festlegung 130 zur Verfügung gestellt wird, die in Abhängigkeit vom Diagnoselambda-Korrekturwert Iam_Diag_Korr den Diagnosegemisch-Lambda-Soll-Signalverlauf Iam_Diag_Sol durch Anheben beziehungsweise Absenken des Lambdas beeinflusst mit dem Ziel, in den folgenden Perioden des Diagnosegemisch-Lambda-Soll-Signalverlaufsam_Diag_Sol eine bessere Übereinstimmung zwischen dem gesteuerten Diagnosegemisch-Lambda-Soll-Signalverlauf Iam_Diag_Sol und dem sich einstellenden Diagnosegemisch-Lambda-Ist- Signalverlauf zu erhalten. Zur Beeinflussung des Diagnosegemisch-Lambda-Soll-Signalverlaufs Iam_Diag_Sol kann in das Kraftstoffsignal m_K oder in die Luftzuführung der Brennkraftmaschine 110 eingegriffen werden.

Die ermittelte Zeitdifferenz ti_D kann in der Zeitdifferenz-Bewertung 160 weiterhin dazu herangezogen werden, ein Fehlersignal F zu ermitteln. Hierzu wird die Zeitdifferenz ti_D mit einem vorgegebenen Zeitdifferenz-Schwellenwert ti_D_Lim verglichen. Wenn die Zeitdifferenz ti_D den Zeitdifferenz-Schwellenwen ti_D_Lim überschreitet, wird das Fehlersignal F ausgegeben, mit dem beispielsweise signalisiert werden kann, dass das Diagnoseergebnis voraussichtlich unzuverlässig ist oder mit welchem eine laufende Diagnose abgebrochen werden kann. Weiterhin kann das Fehlersignal F festlegen, dass ein bereits ermitteltes Diagnoseergebnis verworfen werden soll.

Zur weiteren Erhöhung der Zuverlässigkeit der Katalysatordiagnose kann eine Mittelwertbildung bei der Ermittlung des Lambda-1-Durchgangs 211 des Diagnosegemisch-Lambda-Ist-Signalverlaufs Iam_Diag_Is vorgesehen sein. Die Mittelwertbildung sorgt bei einem von Rauschen überlagerten Diagnosegemisch-Lambda-Ist-Signalverlauf Iam_Diag_Is dafür, dass bei einem Wechsel vom fetten zum mageren Diagnosegemisch nicht bereits ein erster, durch Rauschen bedingter Lambda-1-Durchgang 211 als tatsächlicher Lambda-1-Durchgang 211 gewertet wird.

Voraussetzung für die Mittelwertbildung ist die Festlegung eines Abtastintervalls für den Diagnosegemisch-Lambda-Ist-Signalverlauf Iam_Diag_Is, das - bezogen auf den Figur 2 zugrunde liegenden Zeitmaßstab - erheblich kürzer ist, sodass um beispielsweise dem vierten Zeitbereich ti4 eine Vielzahl von Abtastwerten des Diagnosegemisch-Lambda-Ist-Signalverlaufs Iam_Diag_Is vorliegen, damit eine Mittelwertbildung überhaupt möglich ist. Die Mittelwertbildung kann beispielsweise derart erfolgen, dass zunächst ein Verhältnis der Zeitintervalle gebildet wird, in welchen fettes und in welchen mageres Diagnosegemisch vorgelegen hat, und dass anschließend ein Vergleich mit einem Schwellenwert - beispielsweise 50 Prozent - vorgesehen ist.

## Patentansprüche

1. Verfahren zur Diagnose eines in einem Abgasbereich (113) einer Brennkraftmaschine (110) angeordneten Katalysators (115), das auf einer Ermittlung der Sauerstoff-Speicherfähigkeit (O2_Sim) des Katalysators (115) beruht, die anhand eines in Abhängigkeit von einem gemessenen Stromabwärts-Lambdasignal (Iam_nK_Mes) vorgegebenen Diagnosegemisch-Lambda-Soll-Signalverlauf (Iam_Diag_Sol) mit fetten und mageren Lambdawerten ermittelt wird, **dadurch gekennzeichnet, dass** eine Abweichung (210) zwischen einem Diagnosegemisch-Lambda-Ist-Signalverlauf (Iam_Diag_Is) und einem berechneten Diagnosegemisch-Lambda-Signalverlauf (Iam_Diag_Sim) anhand derjenigen Zeitdifferenz (ti_D) ermittelt wird, die zwischen einem Lambda-1-Durchgang (211) des Diagnosegemisch-Lambda-Ist-Signalverlaufs (Iam_Diag_Is) und einem Lambda-1-Durchgang (212) des berechneten Diagnosegemisch-Lambda-Signalverlaufs (Iam_Diag_Sim) auftritt, und dass die Zeitdifferenz (ti_D) zur Korrektur des vorgegebenen Diagnosegemisch-Lambda-Soll-Signalverlaufs (Iam_Diag_Sol) mittels eines Diagnoselambda-Korrekturwerts (Iam_Diag_Korr) oder zum Abbruch der Diagnose herangezogen wird.

2. Verfahren nach Anspruch 1, **dadurch gekennzeichnet, dass** der Lambda-1-Durchgang (211) des Diagnosegemisch-Lambda-Ist-Signalverlaufs (Iam_Diag_Is) anhand eines gemessenen Stromaufwärts-Lambdasignals (Iam_vK_Mes) mit Sprung-Charakteristik erfasst wird.

3. Verfahren nach Anspruch 2, **dadurch gekennzeichnet, dass** eine Mittelwertbildung bei der Ermittlung des Lambda-1-Durchgangs (211) vorgesehen wird.

4. Verfahren nach Anspruch 1, **dadurch gekennzeichnet, dass** der Diagnosegemisch-Lambda-Soll-Signalverlauf (Iam_Diag_Sol) sprungförmig auf fette und magere Lambdawerte festgelegt wird.

5. Verfahren nach Anspruch 1, **dadurch gekennzeichnet, dass** aus der Zeitdifferenz (ti_D) ein Diagnoselambda-Korrekturwert (Iam_Diag_Korr) für den Diagnosegemisch-Lambda-Soll-Signalverlauf (Iam_Diag_Sol) festgelegt wird.

6. Verfahren nach Anspruch 1, **dadurch gekennzeichnet, dass** die Diagnose abgebrochen wird, wenn die Zeitdifferenz (ti_D) einen vorgegebenen Zeitdifferenz-Schwellenwert (ti_D_Lim) überschreitet.

7. Vorrichtung zur Diagnose eines in einem Abgasbereich (113) einer Brennkraftmaschine (110) angeordneten Katalysators (115), **dadurch gekennzeichnet, dass** zur Durchführung des Verfahrens nach einem der vorhergehenden Ansprüche ein speziell hergerichtetes Steuergerät (120) vorgesehen ist.

8. Vorrichtung nach Anspruch 7, **dadurch gekennzeichnet, dass** stromaufwärts vor dem Katalysator (115) ein Sprung-Lambdasensor (114) angeordnet ist.

9. Steuergerätprogramm, das alle Schritte eines Verfahrens nach einem der Ansprüche 1 bis 6 ausführt, wenn es in einem Steuergerät (120) abläuft.

10. Steuergerät-Programmprodukt mit einem auf einem maschinenlesbaren Träger gespeicherten Programmcode zur Durchführung des Verfahrens nach einem der Ansprüche 1 bis 6, wenn das Programm in einem Steuergerät (120) ausgeführt wird.

## Claims

1. Method for the diagnosis of a catalytic converter (115) which is arranged in an exhaust area (113) of an internal combustion engine (110) and which is based on determining the oxygen storage capability (O2_Sim) of the catalytic converter (115), which oxygen storage capability (O2_Sim) is determined on the basis of a diagnostic mixture lambda setpoint signal profile (Iam_Diag_Sol), which is predefined as a function of a measured downstream lambda signal (Iam_nK_Mes), with rich and lean lambda values, **characterized in that** a deviation (210) between a diagnostic lambda actual signal profile (Iam_Diag_Is) and a calculated diagnostic mixture lambda signal profile (Iam_Diag_Sim) is determined on the basis of that time difference (ti_D) which occurs between a lambda 1 crossing (211) of the diagnostic mixture lambda actual signal profile (Iam_Diag_Is) and a lambda 1 crossing (212) of the calculated diagnostic mixture lambda signal profile (lam_Diag_Sim), and **in that** the time difference (ti_D) is used to correct the predefined diagnostic mixture lambda setpoint signal profile (Iam_Diag_Sol) by means of a diagnostic lambda correction value (Iam_Diag_Korr) and/or to abort the diagnosis.

2. Method according to Claim 1, **characterized in that** the lambda 1 crossing (211) of the diagnostic mixture lambda actual signal profile (Iam_Diag_Is) is sensed on the basis of a measured upstream lambda signal (lam_vK_Mes) with a discontinuous characteristic.

3. Method according to Claim 2, **characterized in that** there is provision for mean values to be formed during the determination of the lambda 1 crossing (211).

4. Method according to Claim 1, **characterized in that** the diagnostic mixture lambda setpoint value signal profile (Iam_Diag_Sol) is set discontinuously to rich and lean lambda value.

5. Method according to Claim 1, **characterized in that** a diagnostic lambda correction value (lam_Diag_Korr) for the diagnostic mixture lambda setpoint signal profile (Iam_Diag_Sol) is set from the time difference (ti_D).

6. Method according to Claim 1, **characterized in that** the diagnosis is aborted if the time difference (ti_D) exceeds a predefined time-difference threshold value (ti_D_Lim).

7. Device for diagnosing a catalytic converter (115) which is arranged in an exhaust area (113) of an internal combustion engine (110), **characterized in that** a specially constructed control unit (120) is provided for carrying out the method according to one of the preceding claims.

8. Device according to Claim 7, **characterized in that** a discontinuous lambda sensor (114) is arranged upstream of the catalytic converter (115).

9. Control unit program which executes all the steps of a method according to one of Claims 1-6 when it runs in a control unit (120).

10. Control unit program product having a program code, stored on a machine-readable medium, for carrying out the method according to one of Claims 1-6 when the program is executed in a control unit (120).

## Revendications

1. Procédé de diagnostic d'un catalyseur (115) disposé dans la zone (113) des gaz d'échappement d'un moteur à combustion interne (110), lequel procédé repose sur la détermination de la capacité (O2_Sim) d'accumulation d'oxygène du catalyseur (115), cette détermination étant réalisée à l'aide de l'évolution du signal de consigne du lambda du mélange de diagnostic (Iam_Diag_Sol) prédéterminé par un signal mesuré du lambda en aval (lam_nK_Mes) avec des valeurs de lambda riche et de lambda pauvre,
**caractérisé en ce que**
l'on détermine un écart (210) entre une évolution du signal effectif du lambda du mélange de diagnostic (Iam_Diag_Is) et une évolution calculée du signal de lambda du mélange de diagnostic (Iam_Diag_Sim) à l'aide de la différence de temps (ti_D) qui survient entre un passage (211) par 1 du lambda dans l'évolution du signal effectif du lambda du mélange de diagnostic (lam_Diag_Is) et un passage (212) par 1 du lambda dans l'évolution calculée du signal de lambda du mélange de diagnostic (Iam_Diag_Sim) et **en ce que** la différence de temps (ti_D) est utilisée pour corriger l'évolution prédéterminée du signal de consigne du lambda du mélange de diagnostic (Iam_Diag_Sol) par une valeur de correction du lambda de diagnostic (Iam_Diag_Korr) ou pour interrompre le diagnostic.

2. Procédé selon la revendication 1, **caractérisé en ce que** le passage (211) par 1 du lambda de l'évolution du signal effectif du lambda du mélange de diagnostic (Iam_Diag_Is) est déterminé à l'aide d'une mesure du signal de lambda en amont (lam_vK_Mes) avec une caractéristique de saut.

3. Procédé selon la revendication 2, **caractérisé en ce que** lors de la détermination du passage (211) par 1 du lambda, on forme une valeur moyenne.

4. Procédé selon la revendication 1, **caractérisé en ce que** l'évolution du signal de consigne du lambda du mélange de diagnostic (Iam_Diag_Sol) est définie par une passage brusque entre une valeur de lambda riche et une valeur de lambda pauvre.

5. Procédé selon la revendication 1, **caractérisé en ce qu'**une une valeur de correction du lambda de diagnostic (Iam_Diag_Korr) de l'évolution du signal de consigne du lambda du mélange de diagnostic (Iam_Diag_Sol) est définie à partir de la différence de temps (ti_D).

6. Procédé selon la revendication 1, **caractérisé en ce que** le diagnostic est interrompu lorsque la différence de temps (ti_D) dépasse une valeur de seuil prédéterminée de la différence de temps (ti_D_Lim).

7. Dispositif de diagnostic d'un catalyseur (115) disposé dans la zone (113) des gaz d'échappement d'un moteur à combustion interne (110),
**caractérisé en ce que**
on prévoit pour mettre en oeuvre le procédé selon l'une des revendications précédentes un appareil de commande (120) conçu spécifiquement dans ce but.

8. Dispositif selon la revendication 7, **caractérisé en ce qu'**une sonde (114) de saut de lambda est disposée en amont du catalyseur (115).

9. Programme pour appareil de commande qui exécute toutes les étapes d'un procédé selon l'une des revendications 1 à 6 lorsqu'il se déroule dans un appareil de commande (120).

10. Produit de programme pour appareil de commande qui présente un code de programme, conservé en mémoire sur un support lisible par machine, et qui met en oeuvre le procédé selon l'une des revendications 1 à 6 lorsque le programme est exécuté dans un appareil de commande (120).
